# EUROPEAN PATENT SPECIFICATION

(11) **EP 2 105 824 B1**
(45) Date of publication and mention of the grant of the patent: **20.03.2013**
(21) Application number: 08153461.2
(22) Date of filing: 27.03.2008
(51) Int. Cl.: G06F 3/041, G06F 3/044, G06F 3/042

(54) **Touch screen display for electronic device and method of determining touch interaction therewith**
Touchscreen-Anzeige für elektronische Vorrichtung und Verfahren zur Bestimmung der Berührungsinteraktion damit
Affichage d'écran tactile pour dispositif électronique et procédé pour la détermination de l'interaction tactile avec celui-ci

(43) Date of publication of application: 30.09.2009
(73) Proprietor: Research In Motion Limited, Waterloo, ON N2L 3W8 (CA)
(72) Inventor: Purdy, Michael, Kitchener Ontario N2E 4A4 (CA); Hui, Edward, Waterloo Ontario N2T 2J3 (CA); Lowles, Robert, Waterloo Ontario N2T 2J5 (CA)
(74) Representative: MERH-IP Matias Erny Reichl Hoffmann

(56) References cited:
- WO-A-2007/129085
- CHRISTOPHER RJ ET AL: "Touch Screen With Combined Force And Position Sensing" IP.COM JOURNAL, IP.COM INC., WEST HENRIETTA, NY, US, 1 June 1989 (1989-06-01), XP013027734 ISSN: 1533-0001

## Description

The present application relates generally to electronic devices with touch-sensitive input screens (touch screens) and the determination of touch occurrences at the touch-sensitive input screens.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. A touch screen input/output device is particularly useful on such handheld devices as such handheld devices are small and are therefore limited in space available for user input and output devices. Further, the screen content on the touch screen devices can be modified depending on the functions and operations being performed.

Optical touch screen devices are advantageous over resistive and capacitive touch sensors, for example, as resistive and capacitive touch sensors are employed in a stack of layers over the LCD display, resulting in reduced light transmitted from the display. Optical touch screen devices suffer from inherent disadvantages relating to user interaction and response, however. One such disadvantage is that a long delay time results from the complex methods required to detect a touch occurrence and then determine the location of the touch occurrence. The long period of time can result in, for example, additional or erroneous user-selection or manipulation as the user awaits confirmation of receipt of input from the device.

Improvements in touch screen devices are therefore desirable.

WO-A-2007/129085 discloses a navigation arrangement for an electronic device having a capacitive position sensor that can detect the position of an object with respect to the screen and an inductive position sensor for detecting the position of an intermediate coupler such as a stylus or pen with respect to the screen. It has been suggested to combine position sensing, for example in an article in the ip.com journal in an article by Christopher et al entitled "Touch screen with combined force and position sensing", XP013027734.

### GENERAL

Preferably an aspect obviates or mitigates at least one disadvantage of prior art touch screen devices.

According to one aspect, there may be provided a touch screen display system for use in an electronic device. The touch screen display system may comprise a display device, a capacitive touch-sensor assembly at the display device for detecting a touch occurrence on the display device, and an optical touch-sensor assembly at the display device for determining a location of the touch occurrence on the display device in response to the capacitive touch-sensor assembly detecting the touch occurrence on the display device.

According to another aspect, there may be provided an electronic device that comprises a housing, a display device exposed by the housing, a capacitive touch-sensor assembly disposed on the display device for detecting a touch occurrence on the display, an optical touch-sensor assembly at the display device for determining a location of the touch occurrence on the display, and operational components housed in the housing. The operational components include a processor connected to the display device, the capacitive touch-sensor assembly and the optical touch sensor assembly, the operational components for causing the optical touch-sensor assembly to determine the location of the touch occurrence on the display in response to detecting the touch occurrence at the capacitive touch-sensor assembly.

According to yet another aspect, there may be provided a method of touch detection in a touch screen display system. The method may comprise detecting, at a capacitive touch-sensor assembly disposed on a display device, a touch occurrence on the display device, determining, at an optical touch sensor system coupled to the display device, a location of the touch occurrence in response to determining the touch occurrence at the capacitive touch-sensor assembly, and determining an input as a result of the touch occurrence.

### BRIEF DESCRIPTION OF THE DRAWINGS

Embodiments of the present application will now be described, by way of example only, with reference to the attached Figures, wherein:

Figure 1 is a simplified block diagram of components of a portable electronic device according an embodiment;

Figure 2 is a top view of a portable electronic device according to an embodiment;

Figure 3 is a simplified sectional side view of the portable electronic device of Figure 2;

Figure 4 is a simplified sectional side view of the touch screen display (not to scale); and

Figure 5 is a flow chart showing steps in a method of touch detection in a touch screen display according to an embodiment.

### DESCRIPTION OF PREFERRED EMBODIMENTS

Generally, described is a touch screen display and a method of touch determination at the touch screen display. In an embodiment, the touch screen display includes a display device, a capacitive touch-sensor assembly at the display device for detecting a touch occurrence on the display device, and an optical touch-sensor assembly at the display device for determining a location of the touch occurrence on the display in response to the capacitive touch-sensor assembly detecting the touch occurrence on the display device.

It will be appreciated that for simplicity and clarity of illustration, where considered appropriate, reference numerals may be repeated among the Figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The application generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

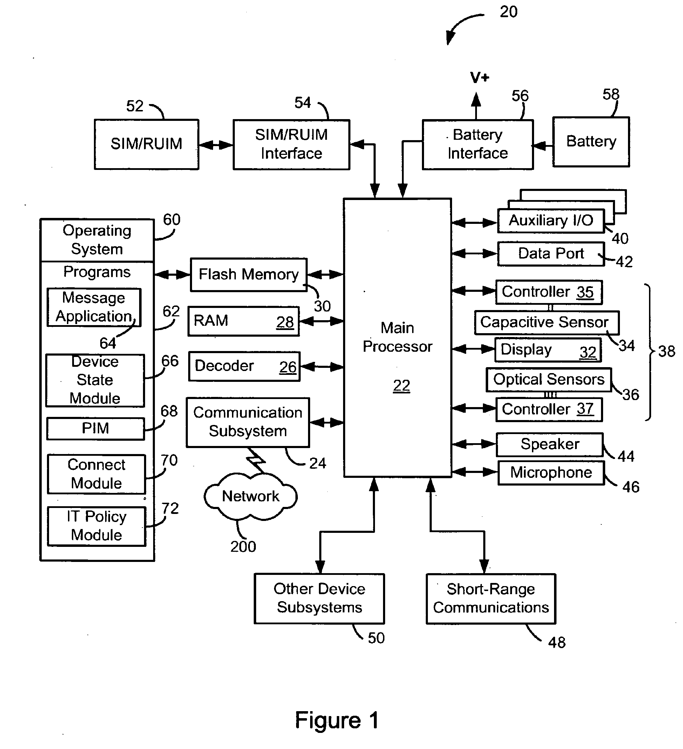

Reference is first made to Figure 1, which shows a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 200. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with the portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display device 32 with a capacitive touch-sensitive assembly including a capacitive touch-sensor layer 34 connected to an electronic controller 35 and an optical touch sensor assembly including optical sensors 36 connected to an optical controller 37. The display device 32 together with the capacitive touch-sensitive assembly and the optical touch-sensitive assembly are part of a touch screen display 38, at least a portion of which can be moveable with respect to the portable electronic device 20 housing. Although not shown in the present embodiment, mechanical switches can be located in the housing for actuation as a result of movement of the touch screen display 38 to provide additional input. The processor 22 also interacts with an auxiliary input/output (I/O) subsystem 40, a data port 42, a speaker 44, a microphone 46, short-range communications 48 and other device subsystems 50. The capacitive touch-sensitive assembly including a capacitive touch-sensor layer 34 connected to an electronic controller 35 and an optical touch sensor assembly including optical sensors 36 connected to an optical controller 37 together provide a touch-sensitive input device and the processor 22 interacts with the capacitive touch-sensor layer 34 via the electronic controller 35 and with the optical sensors 36 via the optical controller 37.

Some of the subsystems of the portable electronic device 20 perform communication-related functions, whereas other subsystems may provide "resident" or on-device functions. By way of example, the display device 32 and the capacitive touch-sensitive assembly including the capacitive touch-sensor layer 34 connected to the electronic controller 35 and the optical touch sensor assembly including the optical sensors 36 connected to the optical controller 37 may be used for both communication-related functions, such as entering a text message for transmission over the network 200, and device-resident functions such as calculator or task list functions.

The portable electronic device 20 can send and receive communication signals over the wireless network 200 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 200. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 200 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 200, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 200. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display device 32 or alternatively to the auxiliary I/O subsystem 40. A subscriber may also compose data items, such as e-mail messages, for example, using the touch screen display 38 and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 200 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display device 32 can also be used to provide additional information such as the identity of a calling party, duration of a voice call, or other voice call related information.

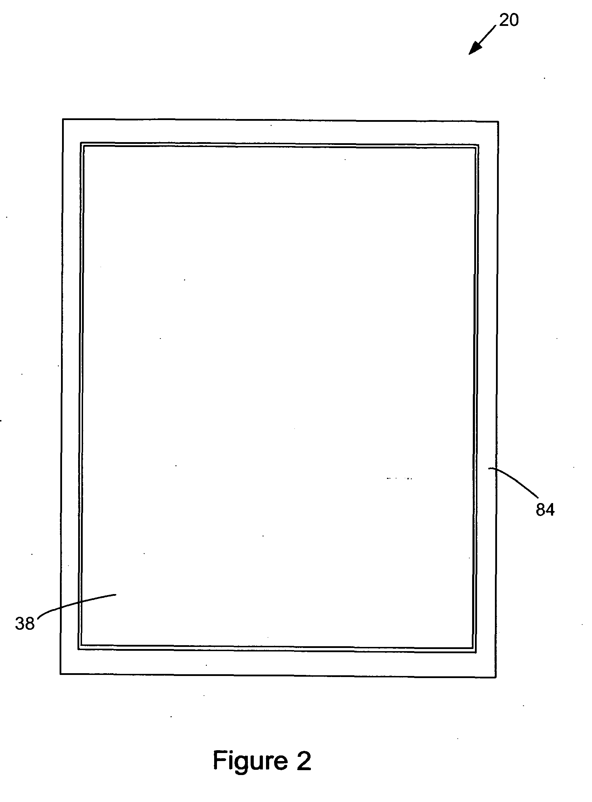

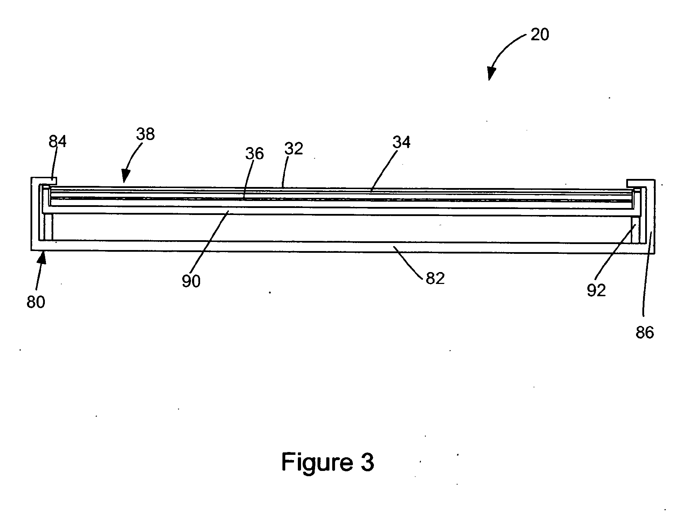

In addition to Figure 1, reference is now made to Figures 2 and 3, which show a front view and a simplified sectional side view, respectively, of an exemplary portable electronic device 20. The portable electronic device includes a housing 80 and the display device 32 that is exposed by the housing 80. The capacitive touch sensor assembly includes a capacitive touch sensor layer 34 at the display device 32 for detecting a touch occurrence on the display device 32. The optical touch-sensor assembly includes the optical sensors 36 at the display device 32 for determining a location of the touch occurrence on the display device 32. Operational components are housed in the housing 80 and include the processor 22 connected to the display device 32, the capacitive touch-sensor assembly and the optical touch sensor assembly. The operational components cause the optical touch-sensor assembly to determine the location of the touch occurrence on the display in response to detecting the touch occurrence at the capacitive touch-sensor assembly.

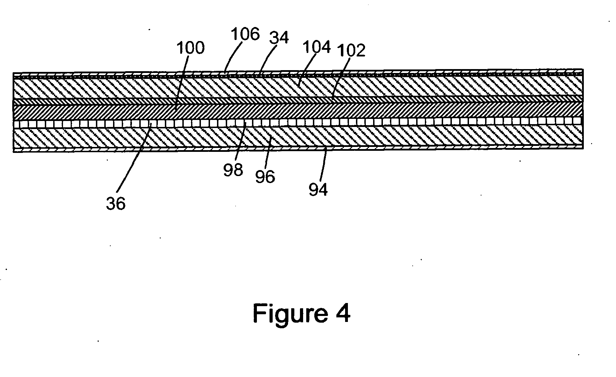

Continued reference is made to Figures 1, 2 and 3 and to Figure 4 to describe an embodiment of the tactile touch screen display for the portable electronic device 20. The portable electronic device 20 includes the housing 80 that houses the internal components shown in Figure 1 and includes a back 82 and a front frame 84 spaced apart by interconnecting sidewalls 86 that extend between and are generally perpendicular to the back 82 and the front frame 84. The front frame 84 frames the touch screen display 38 such that the display device 32 with the capacitive touch sensor layer 34 is exposed for user interaction. The touch screen display 32 can also include a protective cover on the display device 32. The optical sensors 36 are embedded in the display device 32 and are connected to the optical controller 37 for determining the location of an object at a surface of the touch screen display 38.

The back 82 includes a plate (not shown) that is releasably attached for insertion and removal of, for example, the battery 58 and the SIM/RUIM card 62 described above. It will be appreciated that the back 82, the sidewalls 86 and the front frame 84 can be injection molded, for example. According to the embodiment shown in Figure 2, the front frame 84 is generally rectangular although other shapes are possible. For example, the corners of the front frame 84 can be rounded. Although not shown in the present embodiment, the touch screen display 38 can be movable within the housing 80 for providing tactile feedback to the user. Further, mechanical switches can be provided, between the touch screen display 38 and the back 82 for actuation by the touch screen display for providing further tactile feedback to the user and for providing further input to the processor 22. In the present embodiment, the display device 32 is disposed on a support tray 90 that is spaced from the back 82 by, for example, support posts 92. The support tray 90 can be any suitable material such as a magnesium tray and can include, for example, a printed circuit board connected thereto.

It will be appreciated that the touch screen display 38 is an assembly of components including, the display device 32, the capacitive touch sensor layer 34 connected to the electronic controller 35 and the optical sensors 36 connected to the optical controller 37. The touch screen display 38 can include optional components such as a backlight (not shown). The support tray 90 provides structural support for and inhibits bending causing damage or breaking of the display device 32 and the capacitive touch sensor layer 34.

The capacitive touch-sensor assembly includes the capacitive touch sensor layer 34 in the display device 32, between layers of the display device 32 stack. The capacitive touch sensor layer 34 is a conductive coating of suitable transparent material such as Indium Tin Oxide (ITO) formed in the display device 32. The capacitive touch sensor layer 34 is not limited to ITO as any suitable transparent conductive coating can be used. Referring to Figure 4, a simplified sectional side view of an exemplary LCD display device 32 is shown with the capacitive touch sensor 34 and optical touch sensors 36. The LCD display device 32 includes a bottom polarizer 94, bottom glass 96, thin film transistor (TFT) layer 98, LC material 100, colour filters 102, top glass 104 and top polarizer 106. The capacitive touch sensor layer 34 is a conductive coating at any suitable layer within the display device 32. In the embodiment shown in Figure 4, the touch sensor layer 34 is disposed on the top glass 104 layer, between the polarizer 106 and the top glass 104 layers of the LCD display device 32. The LCD display device 32 can also include a backlight (not shown).

Electrical current is conducted across the capacitive touch sensor layer 34 when the portable electronic device 20 is in use. A change in the electric field as a result of capacitive coupling between the finger of a user, or a conductive stylus held by a user, and the capacitive touch sensor layer 34 is detected at the electronic controller 35 and a signal is sent to the processor 22. Any touch occurrence on the touch screen display 38 is thereby determined. The capacitive touch sensor layer 34 can be a single layer of, for example, ITO and can be continuous across the display device 32 thereby acting as a single capacitive sensor button as the X and Y locations of the touch occurrence are not determined via the capacitive touch-sensor assembly.

The touch screen display 38 also includes the optical touch sensor assembly which includes optical sensors 36 that are integrated in the LCD display device 32 for touch location detection. The optical sensors 36 are integrated into the thin film transistor (TFT) layer of the LCD display device 32, in an array in which, for example, the optical sensors are interspersed between the pixels of the TFT layer. For example, the optical sensors can be interspersed every 5^{th} row select line at every 5^{th} column data line in the TFT layer. The optical touch sensor assembly includes other components such as the optical controller 37 connected to the optical sensors 36.

When the touch screen display 38 is touched, the ambient light is blocked at one or more of the optical sensors 36 in the array while ambient light still reaches the remaining optical sensors 36 and the touch is detected at the controller as the blocking of ambient light at the optical sensor or sensors 36 results in a change in readout current. The array arrangement of optical sensors 36 permits determination of the X and Y location of a touch occurrence, thereby determining the X and Y location of a touch occurrence at the touch screen display 38.

While the optical touch sensor assembly determines the location of a touch occurrence at the display device 32, the occurrence of a touch is not determined at the optical touch sensor assembly. Instead, the occurrence of the touch is determined first at the capacitive touch sensor assembly and, in response to determination of the occurrence of a touch, the location of the touch is determined by the optical touch sensor assembly.

The display device 32 provides graphical representations or text, for example, in a menu or menus that are selectable or manipulatable by user interaction via the capacitive touch sensor assembly and the optical touch-sensor assembly of the touch screen display 38. The occurrence of a touch is determined based on a signal received at the electronic controller 35 from the capacitive touch-sensor layer 34 and the X and Y location of the touch occurrence are both determined based on the signals received at the optical controller 37 from the optical sensors 36. It will be appreciated that a user's touch on the touch screen display 38 is determined followed by the determination of the X and Y touch location. The user-selected input is determined based on the X and Y touch location and the application executed by the processor 22.

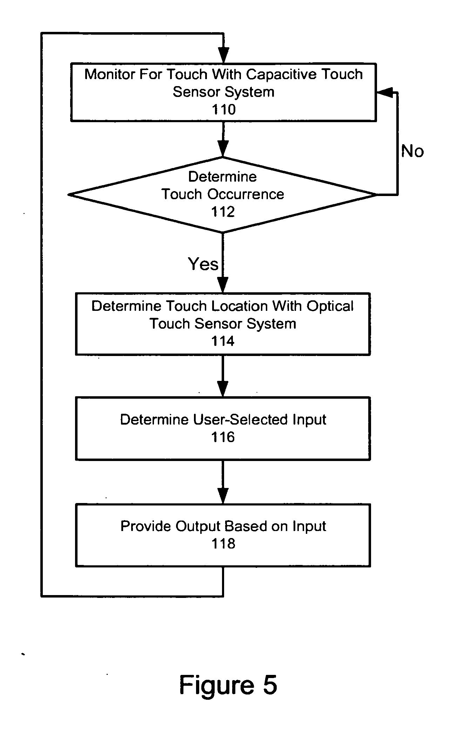

Reference is now made to Figure 5 to describe a method of touch detection at the touch screen display 38. As described, the optical touch sensor system 104 does not determine the occurrence of a touch at the touch screen display 38. Instead, the capacitive touch sensor system determines the occurrence of a touch. Electrical current is conducted across the capacitive touch sensor layer 34 when the portable electronic device 20 is turned on, for example. A change in the electric field as a result of capacitive coupling between the finger of a user, or a conductive stylus held by a user, and the capacitive touch sensor layer 34 is detected at the electronic controller 35. Thus, the electronic controller 35 and the capacitive touch sensor layer 34 are employed for monitoring for a touch occurrence at the touch screen display 38 (step 110).

At step 112, it is determined if a touch has occurred at the touch screen display 38. If no touch is detected, the capacitive touch sensor system continues to monitor for a touch occurrence. When a touch occurs at the touch screen display 38 by a finger of a user or a conductive stylus held by a user, for example, the change in the electric field as a result capacitive coupling between the finger of a user or conductive stylus and the ITO coating is detected at the electronic controller 35 and a signal is sent to the processor 22.

Upon receipt of the signal from the electronic controller 35, the processor 22 initiates determination of the location of the touch occurrence via the optical touch sensor assembly. Thus, the processor 22 communicates with the optical touch controller 37 to initiate and to determine, based on signals received from the optical touch controller 37, the X and Y location of the touch occurrence (step 114).

Next, the user-selected input is determined based on the device state or application executed by the processor 22 and the X and Y touch location on the touch screen display 38 (step 116). Thus, the display device 32 provides graphical representations or text, for example, in the form of a menu or menus, providing user-selectable information or actions that depend on the application executed by the processor. The user-selected information or action is determined based on the location of touch. The method then returns to step 110 as the portable electronic device 20 awaits further input.

The processor then provides output to, for example, the display device 32, based on the determined input (step 118).

Continued reference is made to Figure 5 to describe one example of the method of touch detection at the touch screen display 38. In the present example, the portable electronic device 20 is in a powered "on" state and a menu screen is provided on the display device 32, including a number of options, for example, in the form of graphical representations, of user-selectable programs for execution by the processor 22. As indicated above, the electronic controller 35 and the capacitive touch sensor layer 34 monitor for a touch occurrence at the touch screen display 38 (step 110). For the purpose of the present example, the user touches the touch screen display 38 to select an option to display a list of contacts (Address Book). The touch is detected as a result of capacitive coupling between the finger of the user and the capacitive touch sensor layer 34 and a signal is sent from the electronic controller 35 to the processor 22 (step 112). In response to receipt of the signal from the electronic controller 35, the processor 22 communicates with the optical touch controller 37 to initiate and to determine, based on signals received from the optical touch controller 37, the X and Y location of the touch occurrence (step 114). Next, the user-selected input of the option to display the list of contacts (Address Book) is determined (step 116) and the list of contacts is displayed at the display device 32 (step 118).

The occurrence of a touch is determined first at the capacitive touch sensor assembly and, in response to determination of the occurrence of a touch, the location of the touch is determined by the optical touch sensor assembly. The use of a single capacitive sensor layer in the touch screen device 38 for determination of a touch event obviates the need for complex methods for detecting a touch occurrence at the optical touch sensor assembly, reducing processing time and thereby reducing response time of the portable electronic device. The reduction in response time also reduces the likelihood of erroneous double entry or user-selection as the user awaits output in response to the user-selected input.

The single capacitive touch sensor layer is employed in determining the occurrence of a touch event and the additional layer of, for example, ITO, is thin as compared to the thickness of the multiple layers in a stack of a traditional capacitive touch sensor. Thus, the very thin capacitive touch sensor layer carries out the determination of the occurrence of the touch while transmitted light from the display device is not significantly reduced.

Embodiments of the present application may be represented as a software product stored in a machine-readable medium (also referred to as a computer-readable medium, a processor-readable medium, or a computer usable medium having a computer readable program code embodied therein). The machine-readable medium may be any suitable tangible medium, including magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment. Those of ordinary skill in the art will appreciate that other instructions and operations for implementation may also be stored on the machine-readable medium. Software running from the machine-readable medium may interface with circuitry to perform the described tasks.

While the embodiments described herein are directed to particular implementations of the touch screen display and the portable electronic device, it will be understood that modifications and variations to these embodiments are within the scope and sphere of the present application. For example, in the example described above the capacitive touch sensor layer 34 is disposed on the top glass layer of the LCD display device 32. The capacitive touch sensor layer can be located at any other suitable layer such as between the colour filter and the LC material. Further, in the figures and in the above-described embodiment, the electronic controller 35 and the optical controller 37 are described as being separate controllers. It will be appreciated that the electronic controller 35 and the capacitive controller 37 can be embodied in a single controller. Thus, the controller includes functional components including a capacitive control component and an optical control component. It will also be appreciated that the Figures depict one example of the portable electronic device and other shapes and configurations are possible. The size and shape of many of the features can differ while still providing the same function. Many other modifications and variations may occur to those skilled in the art. All such modifications and variations are believed to be within the sphere and scope of the present application.

## Claims

1. A touch screen display system (38) for use in an electronic device (20), the touch screen display system (38) comprising:
a display device (32);
a capacitive touch-sensor assembly (34, 35) at the display device (32) for detecting a touch occurrence on the display device (32); and
an optical touch-sensor assembly (36, 37) at the display device (32) for determining a location of the touch occurrence on the display device (32) in response to the capacitive touch-sensor assembly (34, 35) detecting the touch occurrence on the display device (32).

2. The touch screen display system (38) according to claim 1, wherein the capacitive touch-sensor assembly (34, 35) comprises a capacitive control component (35) for detecting the touch occurrence.

3. The touch screen display system (38) according to claim 1 or claim 2, wherein the optical touch-sensor assembly (36, 37) comprises an optical control component (37).

4. The touch screen display system (38) according to claim 3, wherein a single touch screen controller comprises the capacitive control component (35) and the optical control component (37).

5. The touch screen display system (38) according to any one of the preceding claims wherein the capacitive touch-sensor assembly (34, 35) is arranged to detect the touch occurrence absent detection of location of the touch occurrence at the capacitive touch-sensor assembly (34, 35).

6. The touch screen display system (38) according to any one of the preceding claims, wherein the optical touch-sensor assembly (36, 37) is arranged to detect location of the touch occurrence, absent detection of occurrence of the touch at the optical touch sensor assembly (36, 37).

7. The touch screen display system (38) according to any one of the preceding claims, wherein the optical touch-sensor assembly (36, 37) comprises optical sensors (36) integrated into the display device (32).

8. The touch screen display system (38) according to any one of the preceding claims, wherein the capacitive touch-sensor assembly (34, 35) comprises a capacitive touch sensor layer (34) between layers of the display device (32).

9. A method of touch determination in a touch screen display system (38), the method comprising:
detecting, at a capacitive touch-sensor assembly (34, 35) disposed on a display device (32), a touch occurrence on the display device (32);
determining, at an optical touch sensor system (36, 37) coupled to the display device (32), a location of the touch occurrence in response to determining the touch occurrence at the capacitive touch-sensor assembly (34, 35); and
determining an input as a result of the touch occurrence.

10. The method according to claim 9 wherein determining, at the capacitive touch-sensor assembly (34, 35), the touch occurrence on the display device (32) comprises detecting the touch occurrence absent detection of location of the touch occurrence at the capacitive touch-sensor assembly (34, 35).

11. The method according to claim 9 or claim 10, wherein determining, at the optical touch sensor system (36, 37), the location of the touch occurrence comprises determining the location of the touch occurrence, absent detection of occurrence of the touch at the optical touch sensor systems (36).

12. The method according to any one of claims 9 to 11, comprising effecting a change in output at the display device (32) as a result of the touch occurrence.

13. An electronic device (20) comprising:
a housing (80);
a touch screen display system (38) according to any one of claims 1 to 8; and
operational components housed in the housing and comprising a processor (22) connected to the display device (32), the capacitive touch-sensor assembly (34, 35) and the optical touch sensor assembly (36, 37), the operational components for causing the electronic device (20) to perform the steps of the method of any one of claims 9 to 12.

14. A computer readable medium containing computer-executable instructions that, when performed by a processor (22) of an electronic device (20), cause said electronic device (20) to implement the steps of the method of any one of claims 9 to 12.

## Patentansprüche

1. Ein Berührungsbildschirmanzeigesystem (38) zur Verwendung in einer elektronischen Vorrichtung (20), wobei das Berührungsbildschirmanzeigesystem (38) aufweist:
eine Anzeigevorrichtung (32);
eine "kapazitiver Berührungssensor"-Anordnung (34, 35) an der Anzeigevorrichtung (32) zum Erfassen eines Stattfindens einer Berührung auf der Anzeigevorrichtung (32); und
eine "optischer Berührungssensor"-Anordnung (36, 37) an der Anzeigevorrichtung (32) zum Bestimmen einer Stelle des Stattfindens einer Berührung auf der Anzeigevorrichtung (32) in Reaktion darauf, dass die "kapazitiver Berührungssensor"-Anordnung (34, 35) das Stattfinden einer Berührung auf der Anzeigevorrichtung (32) erfasst.

2. Das Berührungsbildschirmanzeigesystem (38) gemäß Anspruch 1, wobei die "kapazitiver Berührungssensor"-Anordnung (34, 35) eine kapazitive Steuerungskomponente (35) zum Erfassen des Stattfindens einer Berührung aufweist.

3. Das Berührungsbildschirmanzeigesystem (38) gemäß Anspruch 1 oder Anspruch 2, wobei die "optischer Berührungssensor"-Anordnung (36, 37) eine optische Steuerungskomponente (37) aufweist.

4. Das Berührungsbildschirmanzeigesystem (38) gemäß Anspruch 3, wobei eine einzelne Berührungsbildschirm-Steuervorrichtung die kapazitive Steuerungskomponente (35) und die optische Steuerungskomponente (37) aufweist.

5. Das Berührungsbildschirmanzeigesystem (38) gemäß einem der vorhergehenden Ansprüche, wobei die "kapazitiver Berührungssensor"-Anordnung (34, 35) ausgebildet ist, das Stattfinden einer Berührung zu erfassen ohne eine Erfassung einer Stelle des Stattfindens einer Berührung an der "kapazitiver Berührungssensor"-Anordnung (34, 35).

6. Das Berührungsbildschirmanzeigesystem (38) gemäß einem der vorhergehenden Ansprüche, wobei die "optischer Berührungssensor"-Anordnung (36, 37) ausgebildet ist, eine Stelle des Stattfindens einer Berührung zu erfassen ohne eine Erfassung eines Stattfindens der Berührung an der "optischer Berührungssensor"-Anordnung (36, 37).

7. Das Berührungsbildschirmanzeigesystem (38) gemäß einem der vorhergehenden Ansprüche, wobei die "optischer Berührungssensor"-Anordnung (36, 37) optische Sensoren (36) aufweist, die in der Anzeigevorrichtung (32) integriert sind.

8. Das Berührungsbildschirmanzeigesystem (38) gemäß einem der vorhergehenden Ansprüche, wobei die "kapazitiver Berührungssensor"-Anordnung (34, 35) eine "kapazitiver Berührungssensor"-Schicht (34) zwischen Schichten der Anzeigevorrichtung (32) aufweist.

9. Ein Verfahren zur Berührungs-Bestimmung in einem Berührungsbildschirmanzeigesystem (38), wobei das Verfahren aufweist:
Erfassen, an einer "kapazitiver Berührungssensor"-Anordnung (34, 35), die auf einer Anzeigevorrichtung (32) angeordnet ist, eines Stattfindens einer Berührung auf der Anzeigevorrichtung (32);
Bestimmen, an einem "optischer Berührungssensor"-System (36, 37), das mit der Anzeigevorrichtung (32) gekoppelt ist, einer Stelle eines Stattfindens einer Berührung in Reaktion auf das Bestimmen des Stattfindens einer Berührung an der "kapazitiver Berührungssensor"-Anordnung (34, 35); und
Bestimmen einer Eingabe als ein Ergebnis des Stattfindens einer Berührung.

10. Das Verfahren gemäß Anspruch 9, wobei das Bestimmen, an der "kapazitiver Berührungssensor"-Anordnung (34, 35), des Stattfindens einer Berührung auf der Anzeigevorrichtung (32) aufweist ein Erfassen der Stattfinden einer Berührung ohne eine Erfassung einer Stelle des Stattfindens einer Berührung an der "kapazitiver Berührungssensor"-Anordnung (34, 35).

11. Das Verfahren gemäß Anspruch 9 oder Anspruch 10, wobei das Bestimmen, an dem "optischer Berührungssensor"-System (36, 37), der Stelle des Stattfindens einer Berührung aufweist ein Bestimmen der Stelle des Stattfindens einer Berührung ohne eine Erfassung eines Stattfindens der Berührung an dem "optischer Berührungssensor"-System (36, 37).

12. Das Verfahren gemäß einem der Ansprüche 9 bis 11, das aufweist ein Bewirken einer Änderung der Ausgabe an der Anzeigevorrichtung (32) als ein Ergebnis des Stattfindens einer Berührung.

13. Eine elektronische Vorrichtung (20), die aufweist:
ein Gehäuse (80);
ein Berührungsbildschirmanzeigesystem (38) gemäß einem der Ansprüche 1 bis 8; und
Betriebskomponenten, die in dem Gehäuse untergebracht sind und einen Prozessor (22) aufweisen, der mit der Anzeigevorrichtung (32), der "kapazitiver Berührungssensor"-Anordnung (34, 35) und der "optischer Berührungssensor"-Anordnung (36, 37) verbunden ist, wobei die Betriebskomponenten vorgesehen sind zum Veranlassen der elektronischen Vorrichtung (20), die Schritte des Verfahrens gemäß einem der Ansprüche 9 bis 12 durchzuführen.

14. Ein computerlesbares Medium, das computerausführbare Anweisungen enthält, die bei Durchführung durch einen Prozessor (22) einer elektronischen Vorrichtung (20) die elektronische Vorrichtung (20) veranlassen, die Schritte des Verfahrens gemäß einem der Ansprüche 9 bis 12 zu implementieren.

## Revendications

1. Système d'affichage à écran tactile (38) destiné à être utilisé dans un dispositif électronique (20), le système d'affichage à écran tactile (38) comprenant :
un dispositif d'affichage (32) ;
un ensemble à capteurs tactiles capacitifs (34, 35) sur le dispositif d'affichage (32) pour détecter un événement de toucher sur le dispositif d'affichage (32) ; et
un ensemble à capteurs tactiles optiques (36, 37) sur le dispositif d'affichage (32) pour déterminer une position de l'événement de toucher sur le dispositif d'affichage (32) en réponse au fait que l'ensemble à capteurs tactiles capacitifs (34, 35) a détecté l'événement de toucher sur le dispositif d'affichage (32).

2. Système d'affichage à écran tactile (38) selon la revendication 1, dans lequel l'ensemble à capteurs tactiles capacitifs (34, 35) comprend un composant de commande capacitif (35) destiné à détecter l'événement de toucher.

3. Système d'affichage à écran tactile (38) selon la revendication 1 ou la revendication 2, dans lequel l'ensemble à capteurs tactiles optiques (36, 37) comprend un composant de commande optique (37).

4. Système d'affichage à écran tactile (38) selon la revendication 3, dans lequel une unité de commande d'écran tactile unique comprend le composant de commande capacitif (35) et le composant de commande optique (37).

5. Système d'affichage à écran tactile (38) selon l'une quelconque des revendications précédentes, dans lequel l'ensemble à capteurs tactiles capacitifs (34, 35) est conçu pour détecter l'événement de toucher en l'absence de détection de la position de l'événement de toucher sur l'ensemble à capteurs tactiles capacitifs (34, 35).

6. Système d'affichage à écran tactile (38) selon l'une quelconque des revendications précédentes, dans lequel l'ensemble à capteurs tactiles optiques (36, 37) est conçu pour détecter la position de l'événement de toucher en l'absence de détection de l'événement de toucher sur l'ensemble à capteurs tactiles optiques (36, 37).

7. Système d'affichage à écran tactile (38) selon l'une quelconque des revendications précédentes, dans lequel l'ensemble à capteurs tactiles optiques (36, 37) comprend des capteurs optiques (36) intégrés au dispositif d'affichage (32).

8. Système d'affichage à écran tactile (38) selon l'une quelconque des revendications précédentes, dans lequel l'ensemble à capteurs tactiles capacitifs (34, 35) comprend une couche de capteurs tactiles capacitifs (34) entre des couches du dispositif d'affichage (32).

9. Procédé de détermination de toucher dans un système d'affichage à écran tactile (38), le procédé consistant à :
détecter, sur un ensemble à capteurs tactiles capacitifs (34, 35) disposés sur un dispositif d'affichage (32), un événement de toucher sur le dispositif d'affichage (32) ;
déterminer, sur le système à capteurs tactiles optiques (36, 37) relié au dispositif d'affichage (32), une position de l'événement de toucher en réponse à la détermination de l'événement de toucher sur l'ensemble à capteurs tactiles capacitifs (34, 35) ; et
déterminer une entrée en tant que résultat de l'événement de toucher.

10. Procédé selon la revendication 9, dans lequel la détermination, sur l'ensemble à capteurs tactiles capacitifs (34, 35), de l'événement de toucher sur le dispositif d'affichage (32) consiste à détecter l'événement de toucher en l'absence de détection de la position de l'événement de toucher sur l'ensemble à capteurs tactiles capacitifs (34, 35).

11. Procédé selon la revendication 9 ou la revendication 10, dans lequel la détermination, sur le système à capteurs tactiles optiques (36, 37), de la position de l'événement de toucher consiste à déterminer la position de l'événement de toucher en l'absence de détection de l'événement de toucher sur les systèmes à capteurs tactiles optiques (36).

12. Procédé selon l'une quelconque des revendications 9 à 11, consistant à effectuer une modification de la sortie sur le dispositif d'affichage (32) en tant que résultat de l'événement de toucher.

13. Dispositif électronique (20) comprenant :
un boîtier (80) ;
un système d'affichage à écran tactile (38) selon l'une quelconque des revendications 1 à 8 ; et
des composants fonctionnels logés dans le boîtier et comprenant un processeur (22) connecté au dispositif d'affichage (32), l'ensemble à capteurs tactiles capacitifs (34, 35) et l'ensemble à capteurs tactiles optiques (36, 37), les composants fonctionnels étant destinés à faire en sorte que le dispositif électronique (20) exécute les étapes du procédé selon l'une quelconque des revendications 9 à 12.

14. Support lisible par ordinateur contenant des instructions exécutables par ordinateur qui, lorsqu'elles sont exécutées par un processeur (22) d'un dispositif électronique (20), font en sorte que ledit dispositif électronique (20) mette en oeuvre les étapes du procédé selon l'une quelconque des revendications 9 à 12.
